(19) Europäisches Patentamt / European Patent Office / Office européen des brevets

(11) **EP 4 765 231 A1**

(12) **EUROPEAN PATENT APPLICATION**
published in accordance with Art. 153(4) EPC

(43) Date of publication:
**24.06.2026 Bulletin 2026/26**

(21) Application number: 25845053.5

(22) Date of filing: **11.07.2025**

(51) International Patent Classification (IPC):
$H01M\ 4/133^{(2010.01)}$    $H01M\ 4/587^{(2010.01)}$
$H01M\ 10/052^{(2010.01)}$    $H01M\ 4/1393^{(2010.01)}$
$H01M\ 4/04^{(2006.01)}$    $H01M\ 4/583^{(2010.01)}$
$H01M\ 4/02^{(2006.01)}$

(52) Cooperative Patent Classification (CPC):
H01M 4/02; H01M 4/04; H01M 4/133;
H01M 4/1393; H01M 4/583; H01M 4/587;
H01M 10/052; Y02E 60/10

(86) International application number:
**PCT/KR2025/010167**

(87) International publication number:
**WO 2026/023956 (29.01.2026 Gazette 2026/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 23.07.2024 KR 20240097421
18.12.2024 KR 20240190271

(71) Applicant: LG Energy Solution, Ltd.
Seoul 07335 (KR)

(72) Inventors:
• **LIM, Dong Ju**
  **Daejeon 34122 (KR)**
• **OH, Hyun Hee**
  **Daejeon 34122 (KR)**
• **KIM, So Yeon**
  **Daejeon 34122 (KR)**

(74) Representative: **Plasseraud IP**
**104 Rue de Richelieu**
**CS92104**
**75080 Paris Cedex 02 (FR)**

(54) **ANODE FOR LITHIUM SECONDARY BATTERY AND MANUFACTURING METHOD THEREFOR**

(57) The present disclosure relates to a negative electrode for a lithium secondary battery and a method of manufacturing the same. The negative electrode satisfies a ratio of porosity to orientation index (O.I.) of a carbon-based negative electrode active material within a predetermined range, thereby shortening the movement path of lithium ions in a negative electrode active layer and significantly lowering diffusion resistance of lithium ions, thereby the rapid charging performance of the negative electrode is excellent. In addition, the negative electrode has an advantage of excellent energy density of the negative electrode because the density of the negative electrode active layer is improved within a range that does not damage the shortened movement path of lithium ions.

【Figure】

EP 4 765 231 A1

**Description**

[Technical Field]

The present disclosure relates to a negative electrode for a lithium secondary battery and a manufacturing method thereof.

This application claims the benefit of priority from Korean Patent Application No. 10-2024-0097421, filed on July 23, 2024, and Korean Patent Application No. 10-2024-0190271, filed on December 18, 2024, the entire contents disclosed therein are incorporated by reference into this disclosure.

[Background]

Lithium secondary batteries have been widely applied not only to small devices such as portable electronic devices but also to medium and large-sized devices such as battery packs for hybrid vehicles or electric vehicles, and power storage devices. As interest in environmental issues has recently grown, the demand base for high-capacity batteries is expanding due to the growth of the market for high-capacity battery-employing devices such as electric vehicles and hybrid electric vehicles, which can replace vehicles using fossil fuels such as gasoline vehicles and diesel vehicles, which are one of the main causes of air pollution.

A lithium secondary battery is a power generation element capable of charging and discharging, which has a stacked structure of positive electrode/separator/negative electrode. When a lithium secondary battery is charged, a lithium deintercalation reaction is induced in which lithium contained in the positive electrode active material is oxidized and released at the positive electrode inside the battery, and a lithium insertion reaction occurs in which lithium is reduced and enters the negative electrode active material at the negative electrode. Since the deintercalation reaction in the positive electrode active material is faster than the insertion reaction in the negative electrode active material, performance such as speed during charging and discharging of the lithium secondary battery is mainly determined by the negative electrode.

Materials containing graphite are widely used as the negative electrode active material of the negative electrode. Graphite has a layered structure and is formed by stacking multiple layers in which carbon atoms form a network structure and spread in a planar shape. During charging, lithium ions penetrate at the edge planes of these graphite layers (the planes where the layers are stacked) and diffuse between the layers, and during discharging, lithium ions are deintercalated and released from the edge planes of the layers. In addition, since graphite has a lower electrical resistivity in the plane direction of the layers than in the stacking direction of the layers, a conduction path for electrons is formed by detouring along the plane direction of the layers.

In conventional lithium secondary batteries using graphite, techniques for magnetically orienting the graphite contained in the negative electrode have been proposed to improve the charging performance of the negative electrode. Specifically, when forming the negative electrode, the (002) crystal plane of graphite is oriented to be substantially perpendicular to the negative electrode current collector in a magnetic field, and this orientation is fixed. In this case, since the edge planes of the graphite layers face the positive electrode active layer, insertion and deintercalation of lithium ions are smoothly performed, and at the same time, the conduction path of electrons is shortened, so that the electron conductivity of the negative electrode can be improved. In addition, a negative electrode including graphite can significantly increase the charging speed of a secondary battery.

However, even when the plane-oriented crystal planes of graphite are oriented nearly perpendicular to the negative electrode current collector using a magnetic field, if the negative electrode active layer is rolled to increase the energy density of the negative electrode, the inclination of the crystal planes of graphite with respect to the negative electrode current collector decreases, resulting in deterioration of orientation. In other words, there is a limit in that it is difficult to simultaneously improve the rapid charging performance and energy density of the negative electrode using a magnetic field.

Accordingly, there is a demand for the development of technology for a negative electrode with excellent rapid charging performance and high energy density.

[Summary]

[Technical Problem]

An object of the present disclosure is to provide a negative electrode having excellent rapid charging performance and high energy density, and a method of manufacturing the same.

[Technical Solution]

The present disclosure provides a negative electrode including a negative electrode current collector, and a negative electrode active layer provided on at least one surface of the negative electrode current collector, and including a carbon-based negative electrode active material.

The carbon-based negative electrode active material includes graphite having a total pore volume in a range of $1\times10^{-5}$ cm$^3$/g to $1\times10^{-1}$ cm$^3$/g. For example, the graphite having the total pore volume in a range of $1\times10^{-5}$ cm$^3$/g to $1\times10^{-1}$ cm$^3$/g may be abbreviated as 'low-swelling graphite'.

The negative electrode active layer satisfies a ratio calculated by Equation 1 below in a range of 0.10 to 0.16.

$$[\text{Equation 1}]$$

$$Y/X$$

In Equation 1,

Y represents an orientation index (O.I.) of the carbon-based negative electrode active material,

X represents a porosity (vol.%) of the negative electrode active layer, and the X is in a range of 22% to 30%.

The orientation index (O.I.) of the carbon-based negative electrode active material is defined by Equation 2 below.

$$[\text{Equation 2}]$$

$$O.I. = I_{004}/I_{110}$$

In Equation 2,

$I_{110}$ represents an intensity of a peak representing a (110) crystal plane of the carbon-based negative electrode active material upon X-ray diffraction spectroscopy (XRD) measurement of the negative electrode active layer, and

$I_{004}$ represents an intensity of a peak representing a (004) crystal plane of the carbon-based negative electrode active material upon X-ray diffraction spectroscopy (XRD) measurement of the negative electrode active layer.

The orientation index (O.I.) of the carbon-based negative electrode active material may be in a range of 1.5 to 8.0.

In addition, the porosity (X) of the negative electrode active layer may be in a range of 25% to 29.5% on average.

The content of the graphite having a total pore volume in a range of $1\times10^{-5}$ cm$^3$/g to $1\times10^{-1}$ cm$^3$/g may be in a range of 25 wt.% to 100 wt.% based on the total weight of the carbon-based negative electrode active material.

In addition, the carbon-based negative electrode active material may further include one or more of natural graphite, artificial graphite, Kish graphite, pyrolytic carbon, carbon microbeads, mesophase calcined carbon using tar or pitch as a raw material, or graphitized coke.

In addition, the negative electrode active layer may have an average thickness of 100 μm to 400 μm.

In addition, the present disclosure provides a secondary battery including the negative electrode described above. The secondary battery is a lithium secondary battery, and may be a cylindrical, pouch-type, or prismatic battery.

Furthermore, the present disclosure provides a method of manufacturing a negative electrode.

The method of manufacturing a negative electrode according to the present disclosure includes applying a negative electrode slurry including a carbon-based negative electrode active material on at least one surface of a negative electrode current collector (S1), applying a magnetic field to the applied negative electrode slurry (S2), drying the negative electrode slurry to which the magnetic field was applied to form a negative electrode active layer (S3), and rolling the formed negative electrode active layer (S4).

In the present disclosure, the carbon-based negative electrode active material includes graphite having a total pore volume in a range of $1\times10^{-5}$ cm$^3$/g to $1\times10^{-1}$ cm$^3$/g.

The content of the graphite having the total pore volume in a range of $1\times10^{-5}$ cm$^3$/g to $1\times10^{-1}$ cm$^3$/g is in a range of 25 wt.% to 100 wt.% based on a total weight of the carbon-based negative electrode active material.

The step (S4) of rolling the negative electrode active layer is controlled such that, when fitting the orientation index (O.I.) of the carbon-based negative electrode active material with respect to porosity of the rolled negative electrode active layer, an average slope in a section where the porosity is 25% to 27% has a value of zero or positive.

The negative electrode active layer satisfies a ratio of Equation 1 below in a range of 0.10 to 0.16.

[Equation 1]

$$Y/X$$

In Equation 1,

Y represents an orientation index (O.I.) of the carbon-based negative electrode active material,
X represents a porosity (vol.%) of the negative electrode active layer, and the X is in a range of 22% to 30%.

In addition, the orientation index (O.I.) of the carbon-based negative electrode active material is defined by Equation 2 below.

[Equation 2]

$$O.I. = I_{004}/I_{110}$$

In Equation 2,

$I_{110}$ represents an intensity of a peak representing a (110) crystal plane of the carbon-based negative electrode active material upon X-ray diffraction spectroscopy (XRD) measurement of the negative electrode active layer, and
$I_{004}$ represents an intensity of a peak representing a (004) crystal plane of the carbon-based negative electrode active material upon X-ray diffraction spectroscopy (XRD) measurement of the negative electrode active layer.

A rolling ratio (vol.%) of the negative electrode active layer is in a range of greater than 30% to 42% or less.

[Advantageous Effects]

The negative electrode according to the present disclosure satisfies a ratio of porosity to orientation index (O.I.) of the carbon-based negative electrode active material within a predetermined range, thereby shortening a movement path of lithium ions in the negative electrode active layer and significantly lowering diffusion resistance of lithium ions, thereby the rapid charging performance of the negative electrode is excellent. In addition, the negative electrode has an advantage of excellent energy density of the negative electrode because the density of the negative electrode active layer is improved within a range that does not damage the shortened movement path of lithium ions.

[Brief Description of the Drawings]

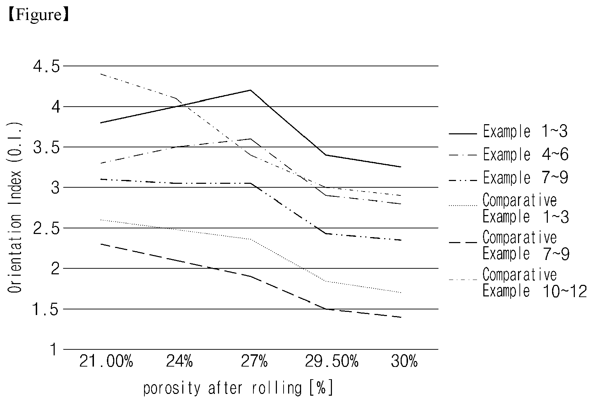

FIG. 1 is a graph illustrating a relationship between porosity and orientation index (O.I.) of a carbon-based negative electrode active material for each example and comparative example.

[Detailed Description]

The present disclosure may have various modifications and various embodiments, and specific embodiments will be described in detail in the following detailed description.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in this specification, "average particle diameter $(D_{50})$" means a particle diameter at which a cumulative value becomes 50% in a particle diameter distribution of particles, and is also referred to as median diameter. The average particle diameter can be measured by a method conventionally applied in the art. For example, the average particle diameter can be measured using a particle size analyzer or an analyzer using a laser diffraction scattering particle size distribution measurement method, but is not limited thereto.

In addition, in the present specification, "the carbon-based negative electrode active material is oriented" means that an a-b axis crystal plane of the carbon-based negative electrode active material constituting negative electrode active material particles is distributed to have a predetermined directionality with respect to a surface of the negative electrode current collector. This may be different from the carbon-based negative electrode active material particles themselves being arranged to have a specific direction inside the negative electrode active layer.

In addition, "the carbon-based negative electrode active material has high orientation" may mean that the carbon-based negative electrode active material contained in the negative electrode active layer is aligned with high frequency with respect to the surface of the negative electrode current collector, and in some cases, may mean that the carbon-based negative electrode active material contained in the negative electrode active layer is aligned at a high angle with respect to the surface of the negative electrode current collector.

In addition, "the carbon-based negative electrode active material has a high orientation index" means that the "orientation index (O.I.)" mentioned in the present specification has a large value, and may mean that the carbon-based negative electrode active material contained in the negative electrode active layer is aligned at a low angle with respect to the surface of the negative electrode current collector. Conversely, "the carbon-based negative electrode active material has a low orientation index" means that the "orientation index (O.I.)" has a small value, and may mean that the carbon-based negative electrode active material contained in the negative electrode active layer is aligned at a high angle with respect to the surface of the negative electrode current collector.

Furthermore, in the present specification, "include as a main component" may mean including a defined component in an amount of 50 wt.% or more (or 50 vol.% or more), 60 wt.% or more (or 60 vol.% or more), 70 wt.% or more (or 70 vol.% or more), 80 wt.% or more (or 80 vol.% or more), 90 wt.% or more (or 90 vol.% or more), or 95 wt.% or more (or 95 vol.% or more) based on a total weight (or total volume). For example, "include a carbon-based negative electrode active material as a main component" may mean including 50 wt.% or more, 60 wt.% or more, 70 wt.% or more, 80 wt.% or more, 90 wt.% or more, or 95 wt.% or more based on a total of 100 wt% of the negative electrode active layer, the negative electrode active material, and/or the negative electrode slurry. In some cases, it may mean that the entire negative electrode active layer, the negative electrode active material, and/or the negative electrode slurry consists of the carbon-based negative electrode active material and is included in an amount of 100 wt.%.

In addition, in the present specification, "average slope in a ~ section" may mean a value obtained by averaging n slopes calculated by dividing a defined section into n equal parts. However, the n may be 5 or more, and preferably 5 to 10.

Hereinafter, the present disclosure will be described in more detail.

## Negative Electrode for Lithium Secondary Battery

The present disclosure provides a negative electrode comprising a negative electrode current collector; and a negative electrode active layer disposed on at least one side of the negative electrode current collector and comprising a carbon-based negative electrode active material.

The negative electrode according to the present disclosure means a negative electrode for a lithium secondary battery. The negative electrode comprises a negative electrode active layer comprising a carbon-based negative electrode active material on at least one side of a negative electrode current collector. The negative electrode active layer is a layer that implements electrical activity of the negative electrode, and is manufactured by applying a negative electrode slurry comprising a negative electrode active material that implements an electrochemical oxidation-reduction reaction during charging and discharging of a battery on at least one side of the negative electrode current collector, and then drying and rolling the same.

The negative electrode active layer comprises, as a main component, a carbon-based negative electrode active material composed of carbon atoms as a negative electrode active material exhibiting electrochemical activity, and the carbon-based negative electrode active material may include a graphite-based compound.

Specifically, the carbon-based negative electrode active material includes low-swelling graphite. In the present disclosure, "low-swelling graphite" means graphite having low expansion characteristics during charging of a secondary battery. For example, when a secondary battery comprising graphite as a negative electrode active material of a negative electrode is manufactured, if expansion characteristics of the negative electrode active layer are low even after repeated charging and discharging cycles of the secondary battery, the graphite included in the negative electrode active layer may be referred to as 'low-swelling graphite'. At this time, the expansion characteristics of the low-swelling graphite can be determined through a change in thickness of the negative electrode active layer according to charging and discharging cycles.

Examples of the low-swelling graphite include low-swelling natural graphite, low-swelling artificial graphite, and the like. In the present disclosure, the low-swelling graphite may be manufactured by a cold isostatic press (CIP) method in which pressure is uniformly applied in each direction of particles at low temperature. The low-swelling graphite manufactured by the cold isostatic press method is isotropic graphite, and the isotropic graphite has low electrical resistance, excellent resistance to thermal shock, and excellent mechanical properties, so that the lifespan characteristics of the negative electrode itself can be improved. In addition, the low-swelling graphite may refer to natural graphite particles coated with carbon. In this case, the low-swelling graphite has a carbon layer, so that not only is expansion of the graphite suppressed during charging of a secondary battery, but also the amount of impurities generated due to physical damage during manufacturing of the carbon-based negative electrode active material and/or manufacturing of a negative electrode using the same or battery assembly process is significantly reduced. In addition, the low-swelling graphite has a feature of high porosity inside graphite particles. Since high porosity of graphite particles can improve the ability to control volume expansion of the negative electrode active material itself, volume expansion characteristics are small during charging of a secondary battery, and the orientation index (O.I.) of the carbon-based negative electrode active material can be maintained low even after rolling.

For example, the low-swelling graphite may satisfy a total pore volume in a predetermined range, and specifically, may have an average total pore volume of $1\times10^{-5}$ cm$^3$/g to $1\times10^{-1}$ cm$^3$/g. More specifically, the low-swelling graphite may have the total pore volume of $5\times10^{-4}$ cm$^3$/g to $1\times10^{-1}$ cm$^3$/g; $1\times10^{-1}$ cm$^3$/g to $1\times10^{-1}$ cm$^3$/g; $5\times10^{-3}$ cm$^3$/g to $1\times10^{-1}$ cm$^3$/g; $1\times10^{-1}$ cm$^3$/g to $5\times10^{-4}$ cm$^3$/g; $1\times10^{-1}$ cm$^3$/g to $1\times10^{-1}$ cm$^3$/g; $5\times10^{-4}$ cm$^3$/g to $5\times10^{-4}$ cm$^3$/g; or $5\times10^{-3}$ cm$^3$/g to $2\times10^{-2}$ cm$^3$/g. The total pore volume of the low-swelling graphite may be measured through a BET measurement method using adsorption of nitrogen ($N_2$) gas. By satisfying the above-described range, the low-swelling graphite can lower diffusion resistance of lithium ions while reducing volume change during charging of a secondary battery.

The negative electrode active layer may include the low-swelling graphite as a main component of the carbon-based negative electrode active material. Specifically, the low-swelling graphite may be included in an amount of 25 wt.% or more to 100 wt.% or less based on a total weight of the carbon-based negative electrode active material. For example, the low-swelling graphite may be included in an amount of 30 wt.% to 100 wt.%; 40 wt.% to 100 wt.%; 50 wt.% to 95 wt.%; 50 wt.% to 90 wt.%; 50 wt.% to 85 wt.%; 50 wt.% to 80 wt.%; 50 wt.% to 75 wt.%; 50 wt.% to 70 wt.%; 60 wt.% to 100 wt.%; 70 wt.% to 100 wt.%; 80 wt.% to 100 wt.%; 90 wt.% to 100 wt.%; 60 wt.% to 95 wt.%; 70 wt.% to 90 wt.%; 80 wt.% to 99 wt.%; 61 wt.% to 99 wt.%; or 75 wt.% to 85 wt.% based on a total weight of the carbon-based negative electrode active material. The present disclosure can maintain the orientation index (O.I.) of the carbon-based negative electrode active material contained in the negative electrode active layer at a low level even after rolling by adjusting the content of the low-swelling graphite included in the negative electrode active layer within the above-described range.

In order to have a short movement path of lithium ions and high energy density during charging of a secondary battery, the negative electrode active layer satisfies a ratio calculated by Equation 1 below in a range of 0.10 to 0.16:

$$[\text{Equation 1}]$$

$$Y/X$$

In Equation 1,

Y represents an orientation index (O.I.) of the carbon-based negative electrode active material,
X represents a porosity (vol.%) of the negative electrode active layer, and the X is in a range of 22% to 30%.

In Equation 1 above, the orientation index (O.I.) corresponding to the Y value is defined by Equation 2 below and may satisfy a predetermined range:

$$[\text{Equation 2}]$$

$$\text{O.I.} = I_{004}/I_{110}$$

In Equation 2,

$I_{110}$ represents an intensity of a peak representing a (110) crystal plane of the carbon-based negative electrode active material upon X-ray diffraction spectroscopy (XRD) measurement of the negative electrode active layer, and
$I_{004}$ represents an intensity of a peak representing a (004) crystal plane of the carbon-based negative electrode active material upon X-ray diffraction spectroscopy (XRD) measurement of the negative electrode active layer.

Specifically, the orientation index (O.I.) defined by Equation 2 may be a relative indicator representing a degree to which a crystal plane of the carbon-based negative electrode active material is oriented in a certain direction, specifically, with respect to a surface of the negative electrode current collector upon X-ray diffraction (XRD) measurement. The negative electrode active layer exhibits peaks at $2\theta=26.5\pm0.2°$, $42.4\pm0.2°$, $43.4\pm0.2°$, $44.6\pm0.2°$, $54.7\pm0.2°$, and $77.5\pm0.2°$ for graphite, which is the carbon-based negative electrode active material, upon X-ray diffraction measurement, and these represent the (002) plane, (100) plane, (101)R plane, (101)H plane, (004) plane, and (110) plane. In addition, the peak appearing at $2\theta=43.4\pm0.2°$ may be viewed as an overlap of peaks corresponding to the (101)R plane of the carbon-based negative electrode active material and the (111) plane of a current collector, for example, copper (Cu).

Among these, the orientation index (O.I.) of the carbon-based negative electrode active material can be measured through an intensity ratio of a peak at $2\theta=54.7\pm0.2°$ representing the (004) plane and a peak at $2\theta=77.5$

±0.2° representing the (110) plane. Here, the peak at 2θ=54.7±0.2° is a peak representing the (004) plane having an inclination with respect to the negative electrode current collector among crystal planes of graphite, and the (004) plane represents an a-b axis crystal plane of the carbon-based negative electrode active material. Therefore, the orientation index (O.I.) may mean that the closer the value is to 0, the closer the inclination with respect to the surface of the negative electrode current collector is to 90°, and the larger the value, the closer the inclination with respect to the surface of the negative electrode current collector is to 0° or 180°. That is, since the negative electrode active layer according to the present disclosure is aligned such that the carbon-based negative electrode active material has a high angle with respect to the negative electrode current collector, specifically, an angle of 60° or more, 70° or more, 70° to 90°, 80° to 90°, 65° to 85°, or 70° to 85° with respect to the negative electrode current collector, the orientation index (O.I.) of the carbon-based negative electrode active material may be low compared to a case where the carbon-based negative electrode active material is aligned at a low angle.

For example, the negative electrode active layer may have an orientation index (O.I.) defined by Equation 2 adjusted to 1.5 to 8.0. Specifically, the negative electrode active layer may have an orientation index (O.I.) of 2.0 to 8.0; 3.0 to 8.0; 4.0 to 8.0; 5.0 to 8.0; 1.5 to 7.0; 1.5 to 6.0; 1.5 to 5.0; 3.0 to 7.0; 2.5 to 5.0; 3.0 to 5.0; 3.5 to 5.0; 4.0 to 5.0; 2.5 to 4.0; 2.5 to 3.5; 2.9 to 3.9; or 3.1 to 4.3.

The carbon-based negative electrode active material in which an a-b axis crystal plane is oriented at a high angle with respect to the surface of the negative electrode current collector provides low tortuosity to the negative electrode active layer. This can improve charging speed by shortening a path through which lithium ions move during charging of a secondary battery.

In addition, the negative electrode active layer may have a rolled form, and accordingly, may have high energy density. In general, when rolling a negative electrode active layer, even if the negative electrode active layer includes a carbon-based negative electrode active material in which an a-b axis crystal plane is oriented, the a-b axis crystal plane of the carbon-based negative electrode active material that was aligned collapses during the rolling process, so that the orientation index (O.I.) increases and the tortuosity of the negative electrode active layer increases again. That is, since the rolled negative electrode active layer offsets an alignment and/or orientation effect of the carbon-based negative electrode active material by rolling, even if rapid charging performance is improved, the effect becomes minimal.

However, the negative electrode active layer according to the present disclosure can improve both energy density and rapid charging performance of the negative electrode active layer by minimizing an increase in the orientation index (O.I.) of the carbon-based negative electrode active material included therein during rolling. As an example, the negative electrode active layer may have a ratio of porosity to orientation index (O.I.) of the carbon-based negative electrode active material within a predetermined value. For example, the negative electrode active layer satisfies a ratio calculated by Equation 1 in a range of 0.10 to 0.16. Specifically, the negative electrode active layer may have a ratio calculated by Equation 1 in a range of 0.10 to 0.16; a range of 0.10 to 0.15; a range of 0.11 to 0.16; a range of 0.10 to 0.15; or a range of 0.10 to 0.14.

In order to implement energy density and excellent rapid charging performance, the negative electrode active layer according to the present disclosure may have i) a predetermined porosity range and ii) a composition of the carbon-based negative electrode active material.

Specifically, a change in the orientation index (O.I.) of the carbon-based negative electrode active material according to rolling of the negative electrode active layer may be affected by a degree of rolling of the negative electrode active layer. Therefore, the negative electrode active layer may satisfy a porosity that indirectly represents the degree of rolling within a predetermined range. The porosity of the negative electrode active layer may be in a range of 22% to 30% on average. For example, the porosity of the negative electrode active layer may be in a range of 25% to 30%; a range of 22% to 28%; a range of 28% to 30%; or a range of 25% to 29.5% on average.

The porosity is a porosity of the rolled negative electrode active layer, corresponds to the X value in Equation 1, and may be an indicator that indirectly represents the degree of rolling of the negative electrode active layer. The porosity has a tendency to decrease as the density of the negative electrode active layer increases by rolling. The porosity is not particularly limited in terms of measurement method, and in the present disclosure, for example, may be measured by a BET (Brunauer-Emmett-Teller) measurement method or a mercury porosimetry (Hg porosimeter) method.

The present disclosure can prevent rapid charging performance from deteriorating due to a reduction in the orientation index (O.I.) of the carbon-based negative electrode active material due to a porosity lower than the lower limit of the above-described range by adjusting the porosity of the negative electrode active layer to the above-described range. In addition, the present disclosure can solve a problem in which energy density of the negative electrode active layer is maintained at a low level due to a high porosity exceeding the upper limit of the above-described range by adjusting the porosity to the above-described range.

In addition, the carbon-based negative electrode active material may further include a negative electrode active material having a carbon component as a main component together with the low-swelling graphite. Specifically, the carbon-based negative electrode active material may further include one or more of natural graphite, artificial graphite, Kish graphite, pyrolytic carbon, carbon microbeads, mesophase calcined carbon using tar or pitch as a raw material (bulk mesophase, liquid crystal pitch-based carbon fiber, etc.), graphitized cokes (raw coke, green coke, pitch coke, needle coke, petroleum coke, coal coke, etc.), and the like.

The carbon-based negative electrode active material may have a form of an assembly in which a plurality of particles is assembled. In this case, one graphite assembly may be formed by aggregating 2 to 100, preferably 3 to 20 graphite.

Meanwhile, the carbon-based negative electrode active material included in the negative electrode active layer may satisfy an average particle diameter in a predetermined range. Specifically, the carbon-based negative electrode active material may exhibit an average particle diameter ($D_{50}$) in a range of 0.5 $\mu$m to 20 $\mu$m. For example, the carbon-based negative electrode active material may exhibit an average particle diameter ($D_{50}$) in ranges of 0.5 $\mu$m to 15 $\mu$m; 0.5 $\mu$m to 10 $\mu$m; 5 $\mu$m to 20 $\mu$m; 10 $\mu$m to 20 $\mu$m; 12 $\mu$m to 18 $\mu$m; 2 $\mu$m to 7 $\mu$m; 0.5 $\mu$m to 5 $\mu$m; or 11 $\mu$m to 15 $\mu$m.

It may be advantageous to make the particle diameter of the carbon-based negative electrode active material smaller in order to maximize the degree of disorder in an expansion direction for each particle so as to prevent expansion of particles due to charging of lithium ions. However, when the particle diameter of the carbon-based negative electrode active material is less than 0.5 $\mu$m, a large amount of binder may be required due to an increase in the number of particles per unit volume. On the other hand, when the average particle diameter exceeds 20 $\mu$m, expansion becomes severe, and as charging and discharging are repeated, the binding property between particles and the binding property between particles and the current collector deteriorates, thereby the cycle characteristics may be greatly reduced.

Such negative electrode active layer comprising the carbon-based negative electrode active material may have a structure in which alignment and/or orientation of the carbon-based negative electrode active material is controlled for each region.

Furthermore, the negative electrode active layer may selectively further include a silicon-based negative electrode active material, a conductive material, a binder, other additives, etc., together with the carbon-based negative electrode active material, which is a main component, as needed.

The silicon-based negative electrode active material is a material containing silicon (Si) as a main component, and can increase the charge/discharge capacity of the negative electrode. Examples of such a silicon-based negative electrode active material include silicon (Si), silicon carbide (SiC), silicon monoxide (SiO), or silicon dioxide ($SiO_2$), and these may be included alone or in combination in the negative electrode active layer. When silicon monoxide (SiO) and silicon dioxide ($SiO_2$) are uniformly mixed or composited as the silicon-based negative electrode active material and included in the negative electrode active layer, they may be expressed as silicon oxide ($SiO_q$, where $0.8 \leq q \leq 2.5$).

In addition, the silicon-based negative electrode active material may be doped or alloyed with Li, Mg, Al, Ca, or Ti, etc. In addition, when the silicon-based negative electrode active material contains an oxygen (O), it may be surface-treated with a carbon coating layer or the like on a surface for the purpose of suppressing volume expansion during charging and simultaneously improving electrical conductivity of the negative electrode active material.

Moreover, the silicon-based negative electrode active material may be included in an amount of 0.1 wt.% to 40 wt.% with respect to the total weight of the negative electrode active layer. Specifically, the silicon-based negative electrode active material may be included in an amount of 0.5 wt.% to 20 wt.%, 1 wt.% to 9 wt.%, 5 wt.% to 15 wt.%, 3 wt.% to 7 wt.%, 11 wt.% to 19 wt.%, 13 wt.% to 17 wt.%, 15 wt.% to 20 wt.%, 10 wt.% to 30 wt.%, 20 wt.% to 40 wt.%, 25 wt.% to 35 wt.%, 15 wt.% to 25 wt.%, or 9 wt.% to 22 wt.% with respect to the total weight of the negative electrode active layer. The present disclosure can improve charge capacity per unit mass while reducing lithium consumption and irreversible capacity loss during initial charge/discharge of a secondary battery by adjusting a content ratio of the silicon-based negative electrode active material included in the negative electrode active layer to the above-described range. In addition, since structural stability of the negative electrode active layer can be improved by minimizing a volume change of the negative electrode active layer during charge/discharge of a secondary battery, the lifespan of the secondary battery can be increased.

The conductive material may include one or more of carbon blacks such as acetylene black, denka black, Ketjen black, super-P, furnace black, lamp black, and thermal black; graphene; carbon nanotubes; or carbon fibers, but is not limited thereto.

For example, the negative electrode active layer may contain carbon black, carbon nanotubes, carbon fibers, etc. alone or in combination as a conductive material.

The content of the conductive material may be 0.1 parts by weight to 10 parts by weight based on the total 100 parts by weight of the negative electrode active layer. Specifically, the conductive material based on the total 100 parts by weight may be 0.1 parts by weight to 8 parts by weight, 0.1 parts by weight to 5 parts by weight, 0.1 parts by weight to 3 parts by weight, 2 parts by weight to 6 parts by weight, or 0.5 parts by weight to 2 parts by weight. The present disclosure can prevent a charge capacity from decreasing due to an increase in resistance of the negative electrode due to a low content of conductive material by controlling the content of conductive material to the above-described range. In addition, the present disclosure can prevent a problem that the charge capacity decreases due to a decrease in the content of negative electrode active material due to an excessive amount of conductive material exceeding the above-described range, or an electrical resistance increases due to an increase in a loading amount of the negative electrode active layer.

The binder is a component that assists in bonding of the negative electrode active material, the conductive material, etc. and bonding to the current collector, and may be appropriately applied within a range that does not deteriorate electrical properties of the negative electrode. For example, the binder may include polyvinylidene fluoride-hexafluoropropylene copolymer (PVDF-co-HFP), polyvinylidene fluoride (PVdF), polyacrylonitrile, polymethylmethacrylate, polyvinyl alcohol, carboxymethylcellulose (CMC), starch, hydroxypropylcellulose, regenerated cellulose, polyvinyl pyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorine rubber, or any one or more thereof.

The content of the binder may be 0.1 parts by weight to 10 parts by weight based on the total 100 parts by weight of the negative electrode active layer. Specifically, the binder based on the total 100 parts by weight of the negative electrode active layer may be 0.1 parts by weight to 8 parts by weight, 0.1 parts by weight to 5 parts by weight, 0.1 parts by weight to 3 parts by weight, or 2 parts by weight to 6 parts by weight. The present disclosure can prevent adhesion of an active layer from decreasing due to a low content of binder or electrical properties of the negative electrode from decreasing due to an excessive amount of binder by controlling the content of binder included in the negative electrode active layer to the above-described range.

In order to implement high charge/discharge capacity and fast charging speed, the negative electrode active layer may have a predetermined average thickness. The negative electrode active layer exhibits greater charge/discharge capacity as the loading amount of the negative electrode active material exhibiting electrochemical activity increases. However, in this case, it is difficult to orient the a-b axis crystal plane of the carbon-based negative electrode active material to have a predetermined inclination with respect to the negative electrode current collector during the manufacturing process of the negative electrode active layer, and thus there is a limit in that the rapid charging performance of the manufactured negative electrode is low. Therefore, the present disclosure can adjust the average thickness of the negative electrode active layer to a predetermined range. Specifically, the negative electrode active layer may have an average thickness in a range of 100 $\mu$m to 400 $\mu$m. For example, the negative electrode active layer may have an average thickness in a range of 100 $\mu$m to 350 $\mu$m; 100 $\mu$m to 300 $\mu$m; 100 $\mu$m to 250 $\mu$m; 100 $\mu$m to 200 $\mu$m; 150 $\mu$m to 400 $\mu$m; 200 $\mu$m to 400 $\mu$m; 150 $\mu$m to 300 $\mu$m; 150 $\mu$m to 250 $\mu$m; or 150 $\mu$m to 220 $\mu$m. The present disclosure can prevent the effect of improving rapid charging performance from becoming minimal due to the orientation index (O.I.) of the carbon-based negative electrode active material being implemented high as the average thickness of the negative electrode active layer exceeds the upper limit of the above-described range by adjusting the average thickness range of the negative electrode active layer to the above-described range. In addition, by adjusting the average thickness of the negative electrode active layer to the above-described range, it is possible to prevent the charge/discharge capacity and energy density of the negative electrode from being lowered due to a thickness thinner than the lower limit of the above-described range.

The negative electrode current collector is not particularly limited as long as it has high conductivity without causing chemical changes in the battery, and for example, copper, stainless steel, nickel, titanium, calcined carbon, and the like may be used, and in the case of copper or stainless steel, a surface-treated material with carbon, nickel, titanium, silver, or the like may also be used. In addition, the average thickness of the negative electrode current collector may be appropriately applied in a range of 1 $\mu$m to 500 $\mu$m in consideration of the conductivity and total thickness of the manufactured negative electrode.

Since the negative electrode for a lithium secondary battery according to the present disclosure has the above-described configuration, the movement path of lithium ions in the negative electrode active layer is shortened and the diffusion resistance of lithium ions is significantly low, thereby the rapid charging performance of the negative electrode is excellent. In addition, the negative electrode has an advantage of excellent energy density of the negative electrode because the density of the negative electrode active layer is improved within a range that does not damage the shortened movement path of lithium ions.

Lithium Secondary Battery

In addition, the present disclosure provides a lithium secondary battery comprising:
an electrode assembly comprising a positive electrode, the negative electrode of the present disclosure described above, and a separator disposed between the positive electrode and the negative electrode.

The lithium secondary battery according to the present disclosure includes an electrode assembly having a structure in which a plurality of positive electrodes and a plurality of negative electrodes are alternately disposed, and a separator is positioned between them. The lithium secondary battery includes the negative electrode of the present disclosure described above, and thus has advantages of excellent rapid charging performance and high energy density by improving lithium-ion diffusion ability.

At this time, since the negative electrode has the same configuration as the above-described configuration, a detailed description thereof will be omitted.

In addition, the positive electrode includes a positive electrode active layer comprising a positive electrode active material on a positive electrode current collector, and the positive electrode active layer may optionally further include a conductive material, a binder, other additives, etc. as needed.

The positive electrode active material is a material that can cause an electrochemical reaction on the positive electrode current collector, and may include one or more lithium metal oxides represented by Chemical Formula 1 and Chemical Formula 2 below, which are capable of reversible intercalation and deintercalation of lithium ions:

[Chemical Formula 1] $\quad Li_1[Ni_mCo_nMn_wM^1_v]O_2$

[Chemical Formula 2] $\quad LiM^2_pMn_qP_rO_4$

In the above Chemical Formula 1 and Chemical Formula 2,

wherein $M^1$ is one or more elements selected from W, Cu, Fe, V, Cr, Ti, Zr, Zn, Al, In, Ta, Y, La, Sr, Ga, Sc, Gd, Sm, Ca, Ce, Nb, Mg, B, or Mo,
l, m, n, w, and v are $1.0 \leq 1 \leq 1.30$, $0.5 \leq m < 1$, $0 < n \leq 0.3$, $0 < w \leq 0.3$, $0 \leq v \leq 0.1$, respectively, where $m + n + w + v = 1$,
wherein $M^2$ is Ni, Co, or Fe,
wherein p is $0.05 \leq p \leq 1.0$,
wherein q is 2-p, and
wherein r is 0 or 1.

The lithium metal oxides represented by the above Chemical Formula 1 and Chemical Formula 2 are materials containing nickel (Ni) and manganese (Mn) in high content, respectively, and when used as a positive electrode active material, have an advantage of being able to stably supply high capacity and/or high voltage electricity compared to positive electrode active materials such as lithium iron phosphate ($LiFeO_4$) conventionally used.

At this time, the lithium metal oxide represented by Chemical Formula 1 may include $LiNi_{0.8}Co_{0.1}Mn_{0.1}O_2$, $LiNi_{0.6}Co_{0.2}Mn_{0.2}O_2$, $LiNi_{0.9}Co_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, etc., and the lithium metal oxide represented by Chemical Formula 2 may include $LiNi_{0.7}Mn_{1.3}O_4$; $LiNi_{0.5}Mn_{1.5}O_4$; $LiNi_{0.3}Mn_{1.7}O_4$, etc., and these may be used alone or in combination.

In addition, the positive electrode active material may be included in an amount of 85 parts by weight or more based on 100 parts by weight of the entire positive electrode active layer. Specifically, the positive electrode active material may be included in an amount of 90 parts by weight or more, 93 parts by weight or more, or 95 parts by weight or more based on 100 parts by weight of the entire positive electrode active layer.

The positive electrode active layer may further include a conductive material, a binder, other additives, etc. together with the positive electrode active material.

The conductive material is used to improve electrical performance of the positive electrode, and may be one conventionally used in the art. Specifically, the conductive material may include one or more of natural graphite; artificial graphite; carbon black such as acetylene black, Denka black, Ketjen black, Super-P, furnace black, lamp black, thermal black, graphene, or carbon nanotubes.

In addition, the conductive material may be included in an amount of 0.1 parts by weight to 5 parts by weight based on 100 parts by weight of the positive electrode active layer. Specifically, the conductive material may be included in an amount of 0.1 parts by weight to 4 parts by weight; 2 parts by weight to 4 parts by weight; 1.5 parts by weight to 5 parts by weight; 1 part by weight to 3 parts by weight; 0.1 parts by weight to 2 parts by weight; or 0.1 parts by weight to 1 part by weight based on 100 parts by weight of each positive electrode active layer.

The binder performs a role of binding the positive electrode active material and conductive material to each other, and may be used without particular limitation as long as it has such a function. Specifically, the binder may include one or more resins of polyvinylidene fluoride-hexafluoropropylene copolymer (PVdF-co-HFP), polyvinylidene fluoride (PVdF), polyacrylonitrile, polymethylmethacrylate, or copolymers thereof. For example, the binder may include polyvinylidene fluoride.

In addition, the binder may be included in an amount of 1 part by weight to 10 parts by weight based on 100 parts by weight of the positive electrode active layer. Specifically, the binder may be included in an amount of 2 parts by weight to 8 parts by weight; or 1 part by weight to 5 parts by weight based on 100 parts by weight of the positive electrode active layer.

A total thickness of the positive electrode active layer is not particularly limited, but specifically, may be in the range of 50 μm to 300 μm. More specifically, may be in ranges of 100 μm to 200 μm; 80 μm to 150 μm; 120 μm to 170 μm; 150 μm to 300 μm; 200 μm to 300 μm; or 150 μm to 190 μm.

In addition, as a positive electrode current collector, one having high conductivity without causing chemical changes in the battery may be used. For example, stainless steel, aluminum, nickel, titanium, fired carbon, etc. may be used, and in the case of aluminum or stainless steel, one surface-treated with carbon, nickel, titanium, silver, etc. may also be used. The average thickness of the current collector may be appropriately applied in a range of 3 μm to 500 μm in consideration of conductivity and total thickness of the positive electrode to be manufactured.

The separator interposed between the positive electrode of the lithium secondary battery and the negative electrode is an insulating thin film having high ion permeability and mechanical strength, and is not particularly limited as long as it is conventionally used in the art. Specifically, a separator including one or more polymers selected from chemical resistance and hydrophobic polypropylene; polyethylene; polyethylene-propylene copolymer may be used. The separator may have a form of a porous polymer substrate such as a sheet or nonwoven fabric comprising the above-described polymer. In some cases, it may also have a form of a composite separator in which organic or inorganic particles are coated on the porous polymer substrate by an organic binder. Moreover, the separator may have an average diameter of pores of 0.01 μm to 10 μm, and an average thickness of 5 μm to 300 μm.

Meanwhile, the lithium secondary battery according to the present disclosure is not particularly limited, but may be a secondary battery that can include a stack-type; zigzag-type; or zigzag-stack-type electrode assembly. For example, the lithium secondary battery according to the present disclosure may be a pouch-type secondary battery or a prismatic secondary battery.

A pouch-type secondary battery and/or a prismatic secondary battery have an advantage of having high utilization in terms of energy density because unit cells of a secondary battery can be packed at high density in a limited space.

## Method of Manufacturing Negative Electrode for Lithium Secondary Battery

Furthermore, the present disclosure provides a method of manufacturing a negative electrode for a lithium secondary battery according to the present disclosure described above.

The method of manufacturing a negative electrode for a lithium secondary battery according to the present disclosure includes applying a negative electrode slurry comprising a carbon-based negative electrode active material on a negative electrode current collector (S1), applying a magnetic field to the applied negative electrode slurry (S2), drying the negative electrode slurry to which the magnetic field was applied to form a negative electrode active layer (S3), and rolling the formed negative electrode active layer (S4).

The step (S1) refers to a process of discharging and coating a negative electrode slurry comprising a carbon-based negative electrode active material on at least one side of a moving negative electrode current collector.

This step (S1) may be applied without particular limitation as long as it is a method conventionally applied in the art, but preferably, a die coating method may be used. The die coating method may be performed through a slot die having a shim for controlling discharge conditions of the negative electrode slurry. The slot die can easily control a loading amount, a coating thickness, etc. of the negative electrode slurry applied on the negative electrode current collector by controlling a shape, position, etc. of the shim.

The negative electrode slurry includes a carbon-based negative electrode active material as a main component, and the carbon-based negative electrode active material includes "low-swelling graphite". In the present disclosure, "low-swelling graphite" means graphite having low expansion characteristics during charging of a secondary battery. The expansion characteristics of the low-swelling graphite can be determined through a change in thickness of the negative electrode active layer according to charging and discharging cycles.

Examples of the low-swelling graphite include low-swelling natural graphite, low-swelling artificial graphite, and the like. In the present disclosure, the low-swelling graphite may be manufactured by a cold isostatic press (CIP) method in which plate-shaped natural graphite is spheroidized and then pressure is uniformly applied in each direction of particles at low temperature. The low-swelling natural graphite manufactured by the cold isostatic press method may be isotropic graphite. Since the isotropic graphite has low electrical resistance, excellent resistance to thermal shock, and excellent mechanical properties, the lifespan characteristics of the negative electrode itself can be improved.

The low-swelling graphite may refer to natural graphite particles coated with carbon. Since the low-swelling graphite has a carbon layer, not only is expansion of the graphite suppressed during charging of a secondary battery, but also the amount of impurities generated due to physical damage during manufacturing of the carbon-based negative electrode active material and/or manufacturing of a negative electrode using the same or battery assembly process is significantly reduced. In addition, the low-swelling graphite has a feature of high porosity inside graphite particles. Since high porosity of graphite particles can improve the ability to control volume expansion of the negative electrode active material itself, volume expansion characteristics are small during charging of a secondary battery, and the orientation index (O.I.) of the carbon-based negative electrode active material can be maintained low even after rolling.

A more detailed description of the low-swelling graphite refers to the above-mentioned description.

The present disclosure can maintain the orientation index (O.I.) of the carbon-based negative electrode active material contained in the negative electrode active layer at a low level even after rolling by adjusting the content of the low-swelling graphite included in the negative electrode slurry within the above-described range.

The negative electrode slurry may further include a carbon-based negative electrode active material in addition to the low-swelling graphite, and may further include a conductive material, a binder, and additives in addition to the negative electrode active material. Since each component included in the negative electrode slurry is the same as the negative electrode active layer of the negative electrode for a lithium secondary battery described above, a detailed description thereof will be omitted.

Meanwhile, the orientation of the carbon-based negative electrode active material may be induced by application of a magnetic field performed after this step (S1).

Specifically, the step (S2) refers to a process of aligning and/or orienting an a-b axis crystal plane of the carbon-based negative electrode active material included in the negative electrode slurry by applying a magnetic field to the negative electrode slurry.

At this time, the degree to which the a-b axis crystal plane of the carbon-based negative electrode active material included in the negative electrode slurry is aligned and/or oriented may vary according to conditions of the applied magnetic field, specifically, an application intensity of the magnetic field.

Here, the magnetic field applied to the negative electrode slurry may have an intensity in a range of 1,000 G to 9,000 G (Gauss) in order to enhance an effect of aligning and/or orienting the a-b axis crystal plane of the carbon-based negative electrode active material. Specifically, the magnetic field applied to the negative electrode slurry may be applied at an intensity in a range of 1,000 G to 8,000 G; 2,000 G to 8,000 G; 3,000 G to 8,000 G; 5,000 G to 9,000 G; 5,000 G to 7,500 G; 5,500 G to 6,500 G; 1,000 G to 7,000 G; 2,000 G to 6,000 G; 1,500 G to 5,000 G; 1,500 G to 4,500 G; 4,000 G to 8,000 G; 4,500 G to 7,000 G; 3,000 G to 6,500 G; or 3,500 G to 6,500 G.

Accordingly, the carbon-based negative electrode active material may be oriented such that an a-b axis crystal plane has a predetermined inclination with respect to the surface of the negative electrode current collector. This can be indirectly confirmed through X-ray diffraction analysis (XRD) of the negative electrode active layer generated after drying of the negative electrode slurry comprising the carbon-based negative electrode active material.

Next, the step (S3) refers to a process of forming a negative electrode active layer by drying the negative electrode slurry to which the magnetic field was applied.

At this time, the drying may be applied without particular limitation as long as it is a method that can be conventionally applied in the art. For example, the drying may be performed by applying thermal energy to the negative electrode slurry using a hot air dryer, a vacuum oven, or the like to dry the negative electrode slurry.

Next, the step (S4) refers to a process of rolling the negative electrode active layer formed by drying. The rolling refers to a process of increasing the density of the entire negative electrode active layer by applying pressure to the surface of the formed negative electrode active layer using a roll press or the like.

The rolling may manufacture a negative electrode having a final negative electrode active material layer formed on a current collector by rolling under linear pressure conditions up to a target thickness and target porosity using rolling equipment such as a roll-press, and then performing vacuum drying.

For example, the rolling may be performed under conditions in which a target thickness (i.e., an average thickness of the negative electrode active layer) is 100 $\mu$m to 400 $\mu$m and a target porosity (i.e., porosity) is 21% to 30%.

Specifically, the rolling may be performed even under heating conditions, but it is appropriate to perform the rolling without heating in terms of suppressing physical property changes of the electrode. For example, the rolling may be performed at a temperature in a range of 18°C to 35°C, and more specifically, may be performed at a temperature of 18°C to 30°C; 18°C to 23°C; 22°C to 25°C; 20°C to 25°C; 20°C; or 25°C.

In addition, the rolling may be performed at a rolling speed in a range of 2 m/s to 7 m/s, and more specifically, may be performed at a rolling speed in a range of 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s.

In addition, the rolling may be performed under a pressure condition of 50 MPa to 200 MPa, and specifically, may be performed under a pressure condition in a range of 50 MPa to 150 MPa; 50 MPa to 100 MPa; 100 MPa to 200 MPa; 150 MPa to 200 MPa; or 80 MPa to 140 MPa.

In addition, the vacuum drying conditions may be performed, for example, in a range of 150°C to 250°C, a range of 160°C to 200°C, or a range of 175°C to 185°C for 1 hour to 15 hours.

The present disclosure can maximize energy density of the negative electrode active layer while minimizing an increase in the orientation index (O.I.) of the carbon-based negative electrode active material of the negative electrode active layer formed by performing rolling under the above temperature, speed, and/or pressure conditions.

In general, when rolling a negative electrode active layer, even if the negative electrode active layer includes a carbon-based negative electrode active material in which an a-b axis crystal plane is oriented, the a-b axis crystal plane of the carbon-based negative electrode active material that was aligned collapses during the rolling process, so that the orientation index (O.I.) increases and the tortuosity of the negative electrode active layer increases again. That is, since the rolled negative electrode active layer offsets an alignment and/or orientation effect of the carbon-based negative electrode active material by rolling, even if rapid charging performance is improved, the effect becomes minimal.

However, the method of manufacturing a negative electrode according to the present disclosure can improve both energy density and rapid charging performance of the negative electrode active layer by minimizing an increase in the orientation index (O.I.) during rolling of the dried negative electrode active layer. For example, when fitting the orientation index (O.I.) of the carbon-based negative electrode active material with respect to porosity of the negative electrode active layer rolled in this step (S4), an average slope in a section where the porosity is 25% to 27% may have a value of zero or positive. For example, when fitting the orientation index (O.I.) of the carbon-based negative electrode active material with respect to porosity, the negative electrode active layer may have an average slope in a section where the porosity is 25% to 27% of 0 or more to 0.5 or less; 0 or more to 0.4 or less; 0 or more to 0.3 or less; 0 or more to 0.2 or less; 0 or more to 0.15 or less; 0 or more to 0.11 or less; 0.05 or more to 0.15 or less; 0.05 or more to 0.2 or less; 0.1 or more to 0.3 or less; 0.2 or more to 0.4 or less; 0.25 or more to 0.5 or less; or 0.01 or more to 0.19 or less.

When fitting the orientation index (O.I.) of the carbon-based negative electrode active material with respect to porosity, an average slope of 0 or more in a section where the porosity is 25% to 27% means that even if rolling density increases in a section where the porosity is 25% to 27%, the orientation index (O.I.) of the carbon-based negative electrode active material does not increase but is maintained or decreases as the rolling density increases. This indicates that a low orientation index (O.I.) of the carbon-based negative electrode active material is implemented in the section even if the rolling density of the negative electrode active layer increases by rolling, which means that the negative electrode active layer according to the present disclosure has high energy density and excellent rapid charging performance.

In contrast, when fitting the orientation index (O.I.) of the carbon-based negative electrode active material with respect to porosity, if the average slope in a section where the porosity is 25% to 27% is less than 0, the tortuosity increases during rolling, so that rapid charging performance may be reduced. In addition, if the average slope in a section where the porosity is 25% to 27% of the negative electrode active layer exceeds the above-described upper limit, there is a limit in that contact characteristics are degraded at an interface between the negative electrode active layer and the negative electrode current collector, resulting in reduced durability.

In addition, the negative electrode active layer rolled in this manner satisfies a ratio calculated by Equation 1 below in a range of 0.10 to 0.16.

[Equation 1]

$$Y/X$$

In Equation 1,

Y represents an orientation index (O.I.) of the carbon-based negative electrode active material,
X represents a porosity (vol.%) of the negative electrode active layer, and here, the X is in a range of 22% to 30%.

A more detailed description of Equation 1 is the same as mentioned above.

In addition, the orientation index (O.I.) of the carbon-based negative electrode active material is defined by Equation 2 below.

[Equation 2]

$$O.I. = I_{004}/I_{110}$$

In Equation 2,

$I_{110}$ represents an intensity of a peak representing a (110) crystal plane of the carbon-based negative electrode active material upon X-ray diffraction spectroscopy (XRD) measurement of the negative electrode active layer, and
$I_{004}$ represents an intensity of a peak representing a (004) crystal plane of the carbon-based negative electrode active material upon X-ray diffraction spectroscopy (XRD) measurement of the negative electrode active layer.

A more detailed description of Equation 2 is the same as mentioned above.

The negative electrode active layer of the negative electrode manufactured according to the present disclosure can improve both energy density and rapid charging performance of the negative electrode active layer by adjusting the ratio calculated by Equation 1 described above. In addition, in order to implement energy density and excellent rapid charging performance, the negative electrode active layer may have a predetermined rolling ratio. The rolling ratio is a value obtained by dividing a thickness deviation before and after rolling by a thickness before rolling, and represents a thickness ratio of the negative electrode active layer reduced due to rolling. Contrary to the porosity, the rolling ratio has a tendency to increase as the density of the negative electrode active layer increases by rolling. The negative electrode active layer according to the present disclosure may have a rolling ratio (vol.%) in a range of 30% to 42% on average.

Specifically, the rolling ratio of the negative electrode active layer may be in a range of 30% to 40%; 32% to 40%; or 30% to 39% on average.

The present disclosure can prevent energy density of the negative electrode active layer from being lowered due to a rolling ratio lower than the lower limit of the above-described range by satisfying the rolling ratio of the negative electrode active layer within the above-described range. In addition, the present disclosure can prevent rapid charging performance from deteriorating due to a reduction in the orientation index (O.I.) of the carbon-based negative electrode active material due to a high rolling ratio exceeding the upper limit of the above-described range by adjusting the rolling ratio to the above-described range.

The method of manufacturing a negative electrode for a lithium secondary battery according to the present disclosure has the above-described configuration, thereby manufacturing a negative electrode with low tortuosity of the negative electrode active layer due to application of a magnetic field and improved energy density by rolling.

Hereinafter, the present disclosure will be described in more detail by examples and comparative examples.

However, the following examples and comparative examples are merely illustrative of the present disclosure, and the content of the present disclosure is not limited to the following examples and comparative examples.

**Examples 1 to 3 and Comparative Examples 1 to 4. Manufacture of Negative Electrode for Lithium Secondary Battery**

Natural graphite (average particle diameter ($D_{50}$): about 11 $\mu$m to 13 $\mu$m), artificial graphite (average particle diameter ($D_{50}$): about 15 $\mu$m to 16 $\mu$m), and low-swelling natural graphite (average particle diameter ($D_{50}$): about 12 $\mu$m to 16 $\mu$m, total pore volume: about 0.006 cm$^3$/g to 0.012 cm$^3$/g) were prepared as a carbon-based negative electrode active material. At the same time, styrene butadiene rubber (SBR) was prepared as a binder, carboxymethylcellulose (CMC) was prepared as a thickening agent, and carbon black (Super-P) was prepared as a conductive material.

Then, as shown in Table 1 below, ① a carbon-based negative electrode active material was prepared, and a negative electrode slurry was prepared by mixing 96.85 wt.% of the prepared carbon-based negative electrode active material, 1.05 wt.% of carboxymethylcellulose (CMC), 1.6 wt.% of styrene butadiene rubber (SBR), and 0.5 wt.% of carbon black with water so that a solid content was 50%. At this time, the viscosity of the prepared negative electrode slurry at room temperature (22 $\pm$ 3°C) was 7,000 to 12,000cps.

Using a die coater, the prepared negative electrode slurry was applied (S1) on a copper foil (thickness: 6 $\mu$m) being transferred by roll-to-roll (transfer speed: 6 m/min). Thereafter, a magnetic field was applied (S2) at an intensity of 8,050$\pm$50 G (Gauss) for 2 seconds to 11 seconds from a lower portion of the applied negative electrode slurry using a magnet. (2) Whether or not the magnetic field was applied was controlled as shown in Table 1 below.

The negative electrode slurry to which the magnetic field had been applied was dried with hot air to form a negative electrode active layer on a negative electrode current collector. The thickness of the formed negative electrode active layer was measured to calculate an average thickness, and the negative electrode current collector on which the negative electrode active layer was provided was slit into a plurality of pieces to have the same width. Each slit negative electrode current collector was rolled with a roll press so that porosity was 21% to 30% to manufacture a negative electrode for a lithium secondary battery. The average thickness was measured for each manufactured negative electrode, and it was confirmed that the average thickness of each negative electrode was 170 $\mu$m to 205 $\mu$m. ③ The rolling ratio was calculated from the average thickness of the negative electrode active layer measured before and after rolling. In addition, ④ the porosity of the negative electrode active layer was calculated using the average thickness of the negative electrode active layer measured above. In addition, X-ray diffraction spectroscopy (XRD) analysis was performed on the negative electrode active layer of the manufactured negative electrode to measure X-ray diffraction of the carbon-based negative electrode active material included in the negative electrode active layer. The measurement conditions are as follows:

- Target: Cu(K$\alpha$-ray) graphite monochromator

- Slit: divergence slit = 1°, receiving slit = 0.1 mm, scattering slit = 1°

- Measurement area: (110) plane: 76.5° < 20 < 78.5° / (004) plane: 53.5° < 20 < 56.0°
⑤ The orientation index (O.I.) of the carbon-based negative electrode active material was calculated from the measured spectrum using Equation 2 below:

[Equation 2]

$$O.I. = I_{004}/I_{110}$$

In Equation 2,

$I_{110}$ represents an intensity of a peak representing a (110) crystal plane of the carbon-based negative electrode active material upon X-ray diffraction spectroscopy (XRD) measurement of the negative electrode active layer, and

$I_{004}$ represents an intensity of a peak representing a (004) crystal plane of the carbon-based negative electrode active material upon X-ray diffraction spectroscopy (XRD) measurement of the negative electrode active layer.

The orientation index (O.I.) of the carbon-based negative electrode active material with respect to the porosity of the negative electrode active layer calculated above was fitted, and ⑥ an average slope in a section where the porosity is 25% to 27% was calculated. All measured and calculated results are shown in Table 1 below.

[Table 1]

| Classification | ①<br>Carbon-based negative electrode active material composition | ②<br>Whether magnetic field was applied | ③<br>Rolling ratio | ④<br>Porosity | ⑤<br>Orientation index (O.I.) | ⑥<br>Average slope in 25% to 27% section |
|---|---|---|---|---|---|---|
| Example 1-a | Low-swelling graphite=100 wt.% | O | 37% | 25% | 4.0 | About 0.1 |
| Example 1-b | | | 35% | 27% | 4.2 | |
| Example 1-c | | | 32% | 29.5% | 3.4 | |
| Example 2-a | Low-swelling graphite: Artificial graphite =80:20 (wt.% / wt.%) | O | 36% | 25% | 3.7 | About 0.05 |
| Example 2-b | | | 35% | 27% | 3.8 | |
| Example 2-c | | | 31% | 29.5% | 3.2 | |
| Example 3-a | Low-swelling graphite: Artificial graphite =50:50 (wt.% / wt.%) | O | 37% | 25% | 3.5 | About 0.05 |
| Example 3-b | | | 34% | 27% | 3.6 | |
| Example 3-c | | | 30% | 29.5% | 3.0 | |
| Comparative Example 1-a | Low-swelling graphite: Artificial graphite =20:80 (wt.% / wt.%) | O | 36% | 25% | 2.48 | About -0.06 |
| Comparative Example 1-b | | | 34% | 27% | 2.36 | |
| Comparative Example 1-c | | | 29% | 29.5% | 1.84 | |
| Comparative Example 2-a | Low-swelling graphite =100 wt.% | X | 36% | 25% | 23.5 | About -1.1 |
| Comparative Example 2-b | | | 34% | 27% | 21.3 | |
| Comparative Example 2-c | | | 30% | 29.5% | 20.6 | |
| Comparative Example 3-a | Artificial graphite =100 wt.% | O | 36% | 25% | 2.1 | About -0.1 |
| Comparative Example 3-b | | | 34% | 27% | 1.9 | |
| Comparative Example 3-c | | | 29% | 29.5% | 1.5 | |
| Comparative Example 4-a | Natural graphite =100 wt.% | O | 38% | 25% | 5.6 | About -0.05 |
| Comparative Example 4-b | | | 36% | 27% | 5.5 | |
| Comparative Example 4-c | | | 34% | 29.5% | 4.9 | |

In addition, FIG. 1 illustrates a graph showing a relationship between porosity and orientation index (O.I.) of the carbon-based negative electrode active material in the above examples and comparative examples. In FIG. 1, calculation results for Examples 1 to 3 and Comparative Examples 1 to 3 are illustrated. In addition, FIG. 1 also shows cases of the porosity of 21% and 33%.

**Examples 4 to 12 and Comparative Examples 8 to 16. Manufacture of Lithium Secondary Battery**

$LiNi_{0.7}Co_{0.1}Mn_{0.1}Al_{0.1}O_2$ having a particle size of 5 $\mu$m was prepared as a positive electrode active material, and a slurry was formed by mixing with polyvinylidene fluoride as a binder and a carbon-based conductive agent at a weight ratio of 94:3:3 in N-methyl pyrrolidone (NMP), cast on an aluminum foil, dried in a vacuum oven at 120°C, and then rolled to manufacture a positive electrode.

An electrode assembly was manufactured using the manufactured positive electrode, the negative electrodes respectively manufactured in Examples 1 to 3 and Comparative Examples 1 to 4, an LTO electrode, and a separator. The separator used was made of polypropylene of 14 $\mu$m. The LTO electrode was manufactured by coating LTO on a copper (C9) wire. The electrode assembly was inserted into a case, and then an electrolyte composition was injected to manufacture a lithium secondary battery.

At this time, types of negative electrodes applied to each lithium secondary battery are shown in Table 2 below.

[Table 2]

| Classification | Type of applied negative electrode |
|---|---|
| Example 4 | Negative electrode manufactured in Example 1-a |
| Example 5 | Negative electrode manufactured in Example 1-b |
| Example 6 | Negative electrode manufactured in Example 1-c |
| Example 7 | Negative electrode manufactured in Example 2-a |
| Example 8 | Negative electrode manufactured in Example 2-b |
| Example 9 | Negative electrode manufactured in Example 2-c |
| Example 10 | Negative electrode manufactured in Example 3-a |
| Example 11 | Negative electrode manufactured in Example 3-b |
| Example 12 | Negative electrode manufactured in Example 3-c |
| Comparative Example 5 | Negative electrode manufactured in Comparative Example 1-a |
| Comparative Example 6 | Negative electrode manufactured in Comparative Example 1-b |
| Comparative Example 7 | Negative electrode manufactured in Comparative Example 1-c |
| Comparative Example 8 | Negative electrode manufactured in Comparative Example 2-a |
| Comparative Example 9 | Negative electrode manufactured in Comparative Example 2-b |
| Comparative Example 10 | Negative electrode manufactured in Comparative Example 2-c |
| Comparative Example 11 | Negative electrode manufactured in Comparative Example 3-a |
| Comparative Example 12 | Negative electrode manufactured in Comparative Example 3-b |
| Comparative Example 13 | Negative electrode manufactured in Comparative Example 3-c |
| Comparative Example 14 | Negative electrode manufactured in Comparative Example 4-a |
| Comparative Example 15 | Negative electrode manufactured in Comparative Example 4-b |
| Comparative Example 16 | Negative electrode manufactured in Comparative Example 4-c |

**Experimental Example.**

The following experiments were performed to evaluate physical properties and performance of negative electrodes manufactured according to the present disclosure.

1) Evaluation of rapid charging performance

Rapid charging performance was evaluated for lithium secondary batteries manufactured in Examples 4 to 12 and Comparative Examples 5 to 16. Specifically, charging and discharging were performed between the positive electrode and LTO to charge the LTO by SOC 50 (%) to match a potential of about 1.53 V. It was found that 1.53 V was maintained in most areas of the SOC on the LTO voltage profile. In addition, while measuring voltages of the positive electrode-LTO and the positive electrode-negative electrode using an EC-lab charger/discharger, a voltage profile of the negative electrode potential was confirmed. A portion where a plateau appears in the profile for the negative electrode during charging was determined as a charging capacity (depth of charge). While increasing the C-rate from 0.5C to 3C in 0.5C increments, the depth of charge at each C-rate was confirmed, and then the required charging time was measured. The measured charging time is shown in Table 3 below.

2) Measurement of energy density

A loading amount per unit area was measured for negative electrodes for lithium secondary batteries manufactured in Examples 1 to 3 and Comparative Examples 1 to 4.

Thereafter, energy density of a large-sized secondary battery cell was calculated using the porosity measured above. At this time, the large-sized secondary battery cell was designed as a cell having a size of 99.7 mm × 301.5 mm × 8.2 mm that satisfies a discharge capacity of 40 Ah under conditions of 1/3C. The results are shown in Table 3 below.

[Table 3]

| Classification | Carbon-based negative electrode active material composition | Porosity | SOC 10 → SOC 80 Charging time required [min] | Energy density [Wh/L] |
|---|---|---|---|---|
| Example 4 | Low-swelling graphite=100 wt.% | 25% | 28.8 | 603.1 |
| Example 5 | | 27% | 29.1 | 596.1 |
| Example 6 | | 29.5% | 27.9 | 587.0 |
| Example 7 | Low-swelling graphite: Artificial graphite =80:20 (wt.%/wt.%) | 25% | 29.3 | 604.0 |
| Example 8 | | 27% | 29.5 | 596.2 |
| Example 9 | | 29.5% | 27.8 | 586.8 |
| Example 10 | Low-swelling graphite: Artificial graphite =50:50 (wt.%/wt.%) | 25% | 29.8 | 604.3 |
| Example 11 | | 27% | 29.8 | 596.6 |
| Example 12 | | 29.5% | 27.8 | 586.5 |
| Comparative Example 5 | Low-swelling graphite: Artificial graphite =20:80 (wt.%/wt.%) | 25% | 30.9 | 603.5 |
| Comparative Example 6 | | 27% | 30.1 | 596.0 |
| Comparative Example 7 | | 29.5% | 28.5 | 586.5 |
| Comparative Example 8 | Low-swelling graphite=100 wt.% | 25% | 41.8 | 603.4 |
| Comparative Example 9 | | 27% | 39.2 | 596.0 |
| Comparative Example 10 | | 29.5% | 36.7 | 585.1 |
| Comparative Example 11 | Artificial graphite=100 wt.% | 25% | 31.9 | 602.7 |
| Comparative Example 12 | | 27% | 30.5 | 596.3 |
| Comparative Example 13 | | 29.5% | 28.4 | 586.5 |
| Comparative Example 14 | Natural graphite=100 wt.% | 25% | 33.4 | 590.2 |
| Comparative Example 15 | | 27% | 31.2 | 579.0 |
| Comparative Example 16 | | 29.5% | 30.7 | 572.4 |

As shown in Table 3 above, it can be seen that negative electrodes according to the present disclosure have excellent rapid charging performance and high energy density at the same time. Specifically, it was found that as the porosity of lithium secondary batteries manufactured in the examples decreased from 29.5% to 25% by rolling, the energy density improved by about 1.3% from about 586 Wh/L to about 604.3 Wh/L. In addition, it was confirmed that the time taken to charge the lithium secondary batteries manufactured in the examples from a state of charge (SOC) of 10% to 80% was 30 minutes or less. In particular, it was found that the phenomenon of delayed charging time was suppressed even when the porosity of the lithium secondary batteries decreased from 27% to 25%.

These results mean that when the negative electrode according to the present disclosure includes low-swelling graphite oriented as a carbon-based negative electrode active material, and a ratio of the orientation index (O.I.) of the carbon-based negative electrode active material to the porosity of the negative electrode active layer satisfies a predetermined range, not only is the energy density of the negative electrode increased, but also an increase in the orientation index (O.I.) of the carbon-based negative electrode active material is improved.

Therefore, it can be seen that the negative electrode according to the present disclosure has excellent rapid charging performance and energy density.

While the present disclosure has been described with reference to preferred embodiments of the present disclosure, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1. A negative electrode, comprising:

   a negative electrode current collector, and
   a negative electrode active layer provided on at least one surface of the negative electrode current collector, and comprising a carbon-based negative electrode active material;
   wherein the carbon-based negative electrode active material comprises graphite having a total pore volume in a range of $1\times10^{-5}$ cm$^3$/g to $1\times10^{-1}$ cm$^3$/g,
   wherein the negative electrode active layer satisfies a ratio calculated by Equation 1 below in a range of 0.10 to 0.16,
   wherein the orientation index (O.I.) of the carbon-based negative electrode active material is defined by Equation 2 below.

   [Equation 1]

   $$Y/X$$

   In Equation 1,
   Y represents an orientation index (O.I.) of the carbon-based negative electrode active material,
   X represents a porosity (vol.%) of the negative electrode active layer, and the X is in a range of 22% to 30%.

   [Equation 2]

   $$O.I. = I_{004}/I_{110}$$

   In Equation 2,
   $I_{110}$ represents an intensity of a peak representing a (110) crystal plane of the carbon-based negative electrode active material upon X-ray diffraction spectroscopy (XRD) measurement of the negative electrode active layer, and
   $I_{004}$ represents an intensity of a peak representing a (004) crystal plane of the carbon-based negative electrode active material upon X-ray diffraction spectroscopy (XRD) measurement of the negative electrode active layer.

2. The negative electrode of claim 1, wherein the orientation index (O.I.) of the carbon-based negative electrode active material is in ae range of 1.5 to 8.0 on average.

3. The negative electrode of claim 1, wherein the porosity (X) of the negative electrode active layer is in a range of 25% to 29.5% on average.

4. The negative electrode of claim 1, wherein the content of the graphite having the total pore volume in a range of $1\times10^{-5}$ cm$^3$/g to $1\times10^{-1}$ cm$^3$/g is in a range of 25 wt.% to 100 wt.% based on the total weight of the carbon-based negative electrode active material.

5. The negative electrode of claim 1, wherein the carbon-based negative electrode active material further comprises one or more of natural graphite, artificial graphite, Kish graphite, pyrolytic carbon, carbon microbeads, mesophase calcined carbon using tar or pitch as a raw material, or graphitized coke.

6. The negative electrode of claim 1, wherein the negative electrode active layer has an average thickness of 100 $\mu$m to 400 $\mu$m.

7. A secondary battery comprising the negative electrode according to claim 1.

8. A method of manufacturing a negative electrode, comprising:

   applying a negative electrode slurry comprising a carbon-based negative electrode active material on at least one surface of a negative electrode current collector (S1),
   applying a magnetic field to the applied negative electrode slurry (S2),
   drying the negative electrode slurry to which the magnetic field was applied to form a negative electrode active layer (S3), and rolling the formed negative electrode active layer (S4),
   wherein the carbon-based negative electrode active material comprises graphite having a total pore volume in a range of $1\times10^{-5}$ cm$^3$/g to $1\times10^{-1}$ cm$^3$/g;
   wherein the content of the graphite having the total pore volume in a range of $1\times10^{-5}$ cm$^3$/g to $1\times10^{-1}$ cm$^3$/g is in a range of 25 wt.% to 100 wt.% based on the total weight of the carbon-based negative electrode active material.

9. The method of manufacturing the negative electrode of claim 8, wherein the step (S4) of rolling the negative electrode active layer is controlled such that, when fitting the orientation index (O.I.) of the carbon-based negative electrode active material with respect to porosity of the rolled negative electrode active layer, an average slope in a section where the porosity is 25% to 27% has a value of zero or positive.

10. The method of manufacturing the negative electrode of claim 8, wherein the negative electrode active layer satisfies a ratio of Equation 1 below in a range of 0.10 to 0.16,

    wherein the orientation index (O.I.) of the carbon-based negative electrode active material is defined by Equation 2 below.

[Equation 1]

$$Y/X$$

In Equation 1,
Y represents an orientation index (O.I.) of the carbon-based negative electrode active material,
X represents a porosity (vol.%) of the negative electrode active layer, and the X is in a range of 22% to 30%.

[Equation 2]

$$O.I. = I_{004}/I_{110}$$

In Equation 2,
$I_{110}$ represents an intensity of a peak representing a (110) crystal plane of the carbon-based negative electrode active material upon X-ray diffraction spectroscopy (XRD) measurement of the negative electrode active layer, and
$I_{004}$ represents an intensity of a peak representing a (004) crystal plane of the carbon-based negative electrode active material upon X-ray diffraction spectroscopy (XRD) measurement of the negative electrode active layer.

11. The method of manufacturing the negative electrode of claim 8, wherein a rolling ratio (vol.%) of the negative electrode active layer is in a range of greater than 30% to 42% or less.

【Figure】

## INTERNATIONAL SEARCH REPORT

| International application No. |
|---|
| **PCT/KR2025/010167** |

**A. CLASSIFICATION OF SUBJECT MATTER**

**H01M 4/133**(2010.01)i; **H01M 4/587**(2010.01)i; **H01M 10/052**(2010.01)i; **H01M 4/1393**(2010.01)i; **H01M 4/04**(2006.01)i; **H01M 4/583**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/133(2010.01); C01B 31/04(2006.01); H01M 10/052(2010.01); H01M 10/0525(2010.01); H01M 10/0569(2010.01); H01M 4/02(2006.01); H01M 4/1393(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 음극 활물질 (anode active material), 탄소 (carbon), 기공 부피 (pore volume), 배향도 (orientation), 결정면 (crystal plane), 자기장 (magnetic field), 압연 (rolling)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2024-0073851 A (KAIFENG RUIFENG NEW MATERIAL CO., LTD. et al.) 27 May 2024 (2024-05-27) claims 1, 3; paragraphs [0074], [0087]-[0095], [0196] | 8,11 |
| A | | 1-7,9,10 |
| Y | US 2023-0216089 A1 (CONTEMPORARY AMPEREX TECHNOLOGY CO., LIMITED) 06 July 2023 (2023-07-06) paragraphs [0071]-[0077], [0080] | 8,11 |
| A | KR 10-2024-0084705 A (LG ENERGY SOLUTION, LTD.) 14 June 2024 (2024-06-14) abstract; claims 1-13 | 1-11 |
| A | JP 2006-083030 A (SONY CORP.) 30 March 2006 (2006-03-30) abstract; claims 1-8 | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 October 2025** | **16 October 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 765 231 A1

## INTERNATIONAL SEARCH REPORT

| International application No. |
|---|
| **PCT/KR2025/010167** |

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2003-0052950 A (SAMSUNG SDI CO., LTD.) 27 June 2003 (2003-06-27)<br>abstract; claims 1-18 | 1-11 |
| PX | KR 10-2821939 B1 (LG ENERGY SOLUTION, LTD.) 17 June 2025 (2025-06-17)<br>abstract; claims 1-9, 11<br>※ This document is the published patent of a priority application of the present international application. | 1-11 |

Form PCT/ISA/210 (second sheet) (July 2022)

## INTERNATIONAL SEARCH REPORT

International application No.

**PCT/KR2025/010167**

| Box No. III | Observations where unity of invention is lacking (Continuation of item 3 of first sheet) |
|---|---|

This International Searching Authority found multiple inventions in this international application, as follows:

The invention of group 1: claims 1-7 pertain to an anode comprising an anode current collector, and an anode active layer provided on at least one surface of the anode current collector and including a carbon-based anode active material, wherein the carbon-based anode active material includes graphite having a total pore volume in the range of 1XW-5 cm3/g to 1X10-1 cm3/g, and a ratio calculated using equation 1 satisfies a range of 0.10 to 0.16.

The invention of group 2: claims 8-11 pertain to an anode manufacturing method comprising the steps of forming, on at least one surface of an anode current collector, an anode active layer by applying a magnetic field to an anode slurry coated with a carbon-based anode active material and drying same, and rolling the formed anode active layer, wherein the carbon-based anode active material includes graphite having a total pore volume in the range of 1X10-5 cm3/g to 1X10-1 cm3/g, and the amount of graphite having a total pore volume in the range of 1X10-5 cm3/g to 1X10-1 cm3/g is in the range of 25 wt% to 100 wt% based on the total weight of the carbon-based anode active material.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
**Information on patent family members**

International application No.

**PCT/KR2025/010167**

| Patent document cited in search report | | | Publication date (day/month/year) | Patent family member(s) | | | Publication date (day/month/year) |
|---|---|---|---|---|---|---|---|
| KR | 10-2024-0073851 | A | 27 May 2024 | CN | 119096378 | A | 06 December 2024 |
| | | | | EP | 4394947 | A1 | 03 July 2024 |
| | | | | EP | 4394947 | A4 | 26 March 2025 |
| | | | | JP | 2024-545485 | A | 09 December 2024 |
| | | | | US | 2025-0246625 | A1 | 31 July 2025 |
| | | | | WO | 2024-103274 | A1 | 23 May 2024 |
| US | 2023-0216089 | A1 | 06 July 2023 | CN | 116670844 | A | 29 August 2023 |
| | | | | CN | 116670844 | B | 09 August 2024 |
| | | | | CN | 118572195 | A | 30 August 2024 |
| | | | | EP | 4184650 | A1 | 24 May 2023 |
| | | | | EP | 4184650 | A4 | 25 September 2024 |
| | | | | EP | 4571931 | A2 | 18 June 2025 |
| | | | | EP | 4571931 | A3 | 20 August 2025 |
| | | | | WO | 2023-050414 | A1 | 06 April 2023 |
| KR | 10-2024-0084705 | A | 14 June 2024 | None | | | |
| JP | 2006-083030 | A | 30 March 2006 | CN | 100461509 | C | 11 February 2009 |
| | | | | CN | 100937289 | A | 28 March 2007 |
| | | | | JP | 4274090 | B2 | 03 June 2009 |
| | | | | KR | 10-1211072 | B1 | 11 December 2012 |
| | | | | KR | 10-2006-0051305 | A | 19 May 2006 |
| | | | | US | 2006-0062717 | A1 | 23 March 2006 |
| | | | | US | 7976984 | B2 | 12 July 2011 |
| KR | 10-2003-0052950 | A | 27 June 2003 | CN | 101662014 | A | 03 March 2010 |
| | | | | JP | 2003-197189 | A | 11 July 2003 |
| | | | | JP | 4150516 | B2 | 17 September 2008 |
| | | | | KR | 10-0445438 | B1 | 21 August 2004 |
| KR | 10-2821939 | B1 | 17 June 2025 | None | | | |

**EP 4 765 231 A1**

## REFERENCES CITED IN THE DESCRIPTION

### Patent documents cited in the description

- KR 1020240097421
- KR 1020240190271